# EUROPEAN PATENT APPLICATION

(11) **EP 2 063 162 A1**
(43) Date of publication of application: **27.05.2009**
(21) Application number: 08167608.2
(22) Date of filing: 27.10.2008
(51) Int. Cl.: F16L 3/015, B27B 31/04, H02G 11/00

(54) **Guide arrangement for the handling elements of a wood object, such as a log**

(30) Priority: 23.11.2007 FI 20075833
(71) Applicant: Veisto OY, 52700 Mäntyharju (FI)
(72) Inventor: Issukka, Seppo, FI-52700, Mäntyharju (FI)
(74) Representative: Järveläinen, Pertti Tauno Juhani

(57) **Abstract**

Guide arrangement for the handling elements (1), more particularly for the rotators/aligners, of a wood object, such as a log (4), for guiding the control elements (2), such as hydraulic leads, electrical leads and/or pneumatic leads, fitted to the handling elements, wherein the control elements are fixed to the rotatable frame piece (3) of the handling element, into which frame piece the logs (4) can be fed, and in that the guide arrangement comprises at least one guide element (5) guiding the control elements, which is fitted to pass via at least one guide part (6) as well as to the rotatable frame piece of the handling element, and in that the control elements are fitted to the guide element to control and/or to compensate the movement of the control elements.

## Description

The object of this invention is a guide arrangement for the handling elements of a wood object, such as a log, and more particularly for the control elements of a rotor-type log rotator/log aligner, wherein the logs in the log rotator/log aligner are fed into the sawing line rotated and aligned into the desired position.
The rotor part of the log rotator/log aligner comprises rolls, between which the log is gripped and with which the log is fed forwards during the rotation. Hydraulics are needed for the rotating and compressing. The rotor part can also comprise electrical appliances or sensors. It must therefore be possible to lead different control elements, such as hoses and cables, to the device, which rotates at least 180 degrees around its center. Hoses cannot pass via the center, because the wood, such as a log, moves in it through the rotor part.

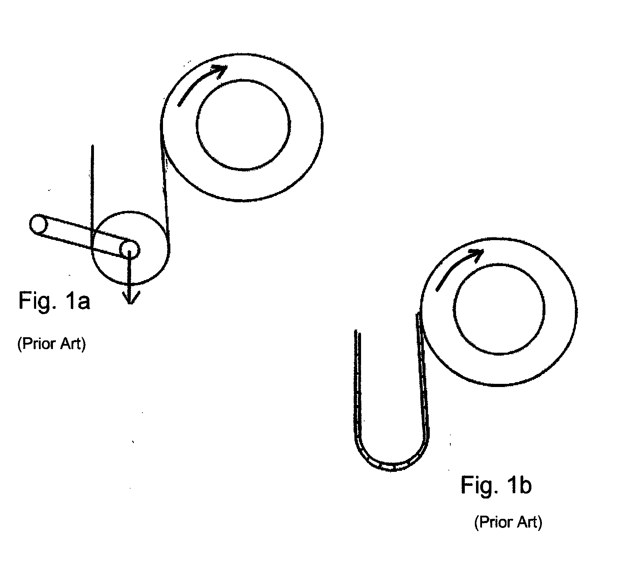

In prior-art solutions hoses and cables are normally led to the rim of the rotor part. The rotor part makes it rotation movement quickly, e.g. in half a second, in which case the hoses and cables move without control, and this causes shortening of the lifetime, as well as wear and breakage, of the hoses and cables.
This is undesirable, and nowadays in prior-art solutions it is attempted to control the uncontrolled movement of the hoses and cables with different tensioner drums, with which movement of the hoses and cables is endeavored to be controlled by loading them, as presented in Fig. 1a, or with cable chains inside which the hoses and cables pass, as presented in Fig. 1b. Uncontrolled movement is not brought adequately under control, however, with these solutions, and they load the hoses and cables, and therefore the solutions are not sufficiently effective.

### Brief description of the invention

The guide arrangement according to the invention is characterized in that it comprises at least one guide element that guides the control elements, which is fitted to pass via at least one guide part as well as to the rotatable frame piece of the handling element, and in that the control elements are fitted to the guide element to control and/or to compensate the movement of the control elements.

In addition, the guide arrangement according to the invention is characterized by what is disclosed in claims 2-12.

One advantage over prior-art solutions is that with the solution according to the invention now presented, the uncontrolled movement of control elements, such as hoses and cables, is brought effectively under control as the rotor rotates, on the rim of the rotor and for the necessary distance outside the rotor.

In the solution according to the invention a guide element, such as a belt or similar (e.g. a steel belt, plastic belt or rubber belt) is used, which is fitted to the rim of the rotor, but passes also via external guide rolls. The hydraulic hoses and cables etc. are fixed at suitable points to this belt.

### Brief description of the figures

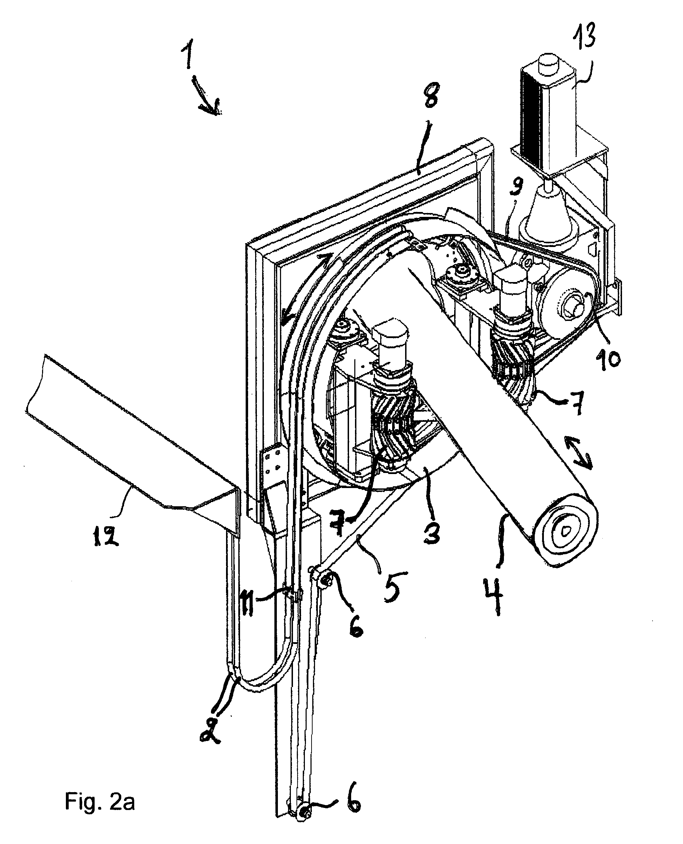

In the following, the invention will be described in more detail by the aid some embodiments with reference to the drawings 2a, 2b, wherein
fig. 2a presents a perspective sketch of the guide arrangement of the invention used in a log rotator/log aligner.

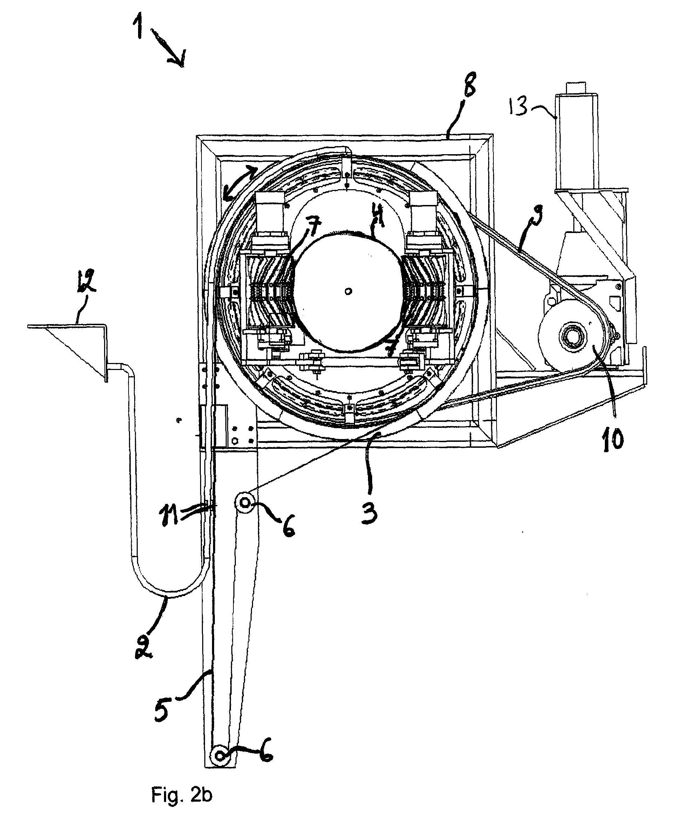

fig. 2b presents a front view of the guide arrangement of the invention used in a log rotator/log aligner.

### Detailed description of the invention

In the guide arrangement according to Fig. 2a and 2b for the handling elements 1, such as more particularly for the rotators/aligners, of a wood object, such as a log 4, control elements 2, such as hydraulic leads, electrical leads and/or pneumatic leads, are fitted to the handling elements 1, for controlling the control elements 2 fixed to the rotatable rotor-like frame piece 3 of the handling element 1, into which frame piece the logs 4 are fed, as presented in Fig. 2a. The logs 4 to be fed into the handling element 1 are moved by means of rotating feeder rolls 7, or similar, inside the frame piece 3, between which feeder rolls or similar the log is placed.
The guide arrangement comprises at least one guide element 5 guiding the control elements 2, which is fitted to pass via at least one guide part 6 as well as to the rotatable rotor-like frame piece 3 of the handling element, and the control elements are also fitted to the guide element 5 to control and/or to compensate the movement of the control elements. When the control elements 2 are fixed at least at one point to the guide element, they are not able to move uncontrollably when the frame piece 3 is rotated and the control elements fitted to it simultaneously move. The frame piece is rotated by means of a rotator element 10 and a belt 10 as well as a drive 13, such as an electric motor.
The reference number 8 refers to the framework of the log rotator/log aligner 1, into which framework the frame piece 3 is fitted.

In the solution according to the invention the guide element 5 is a guide belt, such as a grooved or ungrooved V-belt or a chain belt fitted to the rim of the frame piece, preferably its outer rim. There may be one or more guide parts 6 on the guide belts and/or the guide belt.

The guide element and or guide part guiding the guide element can be metal, such as steel, or plastic or rubber or a combination of the aforementioned, or manufactured from some other suitable material.
The guide part 6 guiding the guide element can be a guide drum, a guide roll or a slide guide.
If the guide belt 5 is openable, both its ends can be fixed to the frame piece 3. The guide belt can also be continuous, i.e. not openable. The guide belt does not need to be fixed to the frame piece, it can stay in the frame piece without a fastening, by means of friction.
For tightening the guide belt 5, the distance of the guide part 6 or guide parts from the frame piece 3 is adjustable, in which case the belt can be tightened as desired.

It is obvious to the person skilled in the art that the different embodiments of the invention are not either limited solely to the examples described above, and that they may for these reasons be varied within the scope of the claims presented below.

The control elements in the solution according to the invention, such as hydraulic cables or electrical cables, can be fixed to the guide element with snap-on locking.
The guide belt can be manufactured from a composite material, such as from different fibers or combinations of them.

## Claims

1. Guide arrangement for the handling elements (1), more particularly for the rotators/aligners, of a wood object, such as a log (4), for guiding the control elements (2), such as hydraulic leads, electrical leads and/or pneumatic leads, fitted to the handling elements, wherein the control elements are fixed to the rotatable frame piece (3) of the handling element, into which frame piece the logs (4) can be fed, **characterized in that** the guide arrangement comprises at least one guide element (5) guiding the control elements, which is fitted to pass via at least one guide part (6) as well as to the rotatable frame piece (3) of the handling element, and **in that** the control elements (2) are fitted to the guide element (5) to control and/or to compensate the movement of the control elements (2).

2. Guide arrangement according to claim 1, **characterized in that** the guide element (5) is a guide belt.

3. Guide arrangement according to claim 1, **characterized in that** the guide part (6) is a guide drum, a guide roll or a slide guide.

4. Guide arrangement according to claim 1 or 2, **characterized in that** the control elements are fixed to the guide element at least at one point.

5. Guide arrangement according to claim 1, **characterized in that** the guide element is fitted to the rim of the frame piece, preferably to its outer rim.

6. Guide arrangement according to claim 1, **characterized in that** there are a more than one guide element and/or guide parts of the guide element.

7. Guide arrangement according to claim 1, **characterized in that** the guide element and/or the guide part are metal, such as steel, or plastic or rubber or, a combination of the aforementioned.

8. Guide arrangement according to claim 1, **characterized in that** both ends of the guide belt are fixed directly or indirectly to the frame piece.

9. Guide arrangement according to claim 1, **characterized in that** the guide belt is grooved or ungrooved.

10. Guide arrangement according to claim 1, **characterized in that** the guide belt is a V-belt or a chain belt.

11. Guide arrangement according to claim 1, **characterized in that** for tightening the guide belt the distance of the guide part or guide parts from the frame piece is adjustable.

12. Guide arrangement according to claim 2 or 3, **characterized in that** the control elements are fixed to the guide element by snap-on locking.
